(19) Europäisches Patentamt
European Patent Office
Office européen des brevets

(11) EP 1 028 123 A2

(12) **EUROPÄISCHE PATENTANMELDUNG**

(43) Veröffentlichungstag:
**16.08.2000 Patentblatt 2000/33**

(51) Int. Cl.[7]: **C07F 17/00**

(21) Anmeldenummer: **00101864.7**

(22) Anmeldetag: **08.06.1998**

(84) Benannte Vertragsstaaten:
**AT BE CH DE DK ES FI FR GB IE IT LI NL PT SE**

(30) Priorität: **10.06.1997 DE 19724465**

(62) Dokumentnummer(n) der früheren Anmeldung(en) nach Art. 76 EPÜ:
**98932131.0 / 0 990 003**

(71) Anmelder:
**Peroxid-Chemie GmbH & Co. KG.
82049 Pullach (DE)**

(72) Erfinder:
- **Munck, Florian
82110 Germering, (DE)**
- **Zeiss, Werner
82547 Eurasburg (DE)**
- **Hartmann, Christoph
82041 Oberhaching (DE)**
- **Vogel, Alexander
Houston TX 77030 (US)**

(74) Vertreter:
**Böhm, Brigitte, Dipl.-Chem. Dr. et al
Postfach 86 08 20
81635 München (DE)**

Bemerkungen:
Diese Anmeldung ist am 31 - 01 - 2000 als Teilanmeldung zu der unter INID-Kode 62 erwähnten Anmeldung eingereicht worden.

(54) **Verfahren zur Herstellung von Metallocen-Verbindungen**

(57) Die vorliegende Erfindung betrifft neue Verfahren zur Herstellung von Metallocenverbindungen.

EP 1 028 123 A2

## Beschreibung

Die vorliegende Erfindung betrifft ein neues Verfahren zur Herstellung von Metallocenverbindungen.

Seit der industriellen Umsetzung der Entdeckungen von Ziegler und Natta gehören Polyolefin-Kunststoffe als ein fester Bestandteil in unsere heutige Gesellschaft. Durch die geschickte Wahl von unterschiedlichen Monomeren können Materialien erzeugt werden, die sich vor allem durch ihre unterschiedlichen Eigenschaften voneinander abheben. Einen enormen Aufschwung im Hinblick auf weiter verbesserte Polymere, aber auch beim Verständnis der molekularen Abläufe der Polymerisationsreaktionen erhielt man durch die Verwendung sog. "single site" Katalysatoren. Diese Polymerisationsinitiatoren, allgemein auch Metallocene genannt, sind in Kombination mit einem Cokatalysator hochaktive "Starter" der Monomerverkettung und gewährleisten auf Grund ihres einheitlichen chemischen und strukturellen Aufbaus eine bestimmte, definierte Polymer- oder Copolymerstruktur.

Der synthetische Zugang zu diesen Katalysatoren stellt somit eine Art Schlüsselfunktion dar. Nachdem dieses Gebiet seit ca. 15 Jahren mit steigender Intensität chemisch untersucht wird, existieren in zahlreichen Publikationen und Patenten Synthesevorschriften.

Der Stand der Technik ist die Verwendung von Metallocendichloriden A für die Generierung des aktiven Katalysatorsystems, z.B. mit Methylaluminoxan (MAO). D.h. das Metallocendichlorid stellt genaugenommen nur eine Katalysatorvorstufe dar.

$$L_2MCl_2 \qquad (A)$$

$$L_2MX_2 \qquad (B)$$

Die entsprechenden Metallocendiamide B (X = $NMe_2$) sind demgegenüber in der (Co)-Polymerisation bisher nicht mit Erfolg verwendet worden. In beiden Formeln A und B bedeutet L Metallocenligand.

Auch wenn mit der Verwendung des Metallocendichlorids A bereits eine Möglichkeit gegeben war, ein aktives Katalysatorsystem zu erzeugen, bestand jedoch nach wie vor ein Bedürfnis an verbesserten Katalysatoren, welche höhere Aktivität oder sonstige Vorteile gegenüber den bisher bekannten Katalysatoren aufweisen.

Solche Vorteile weisen z.B. Katalysatorsysteme für (Co-)Polymerisationsreaktionen auf, enthaltend ein Metallocenamidhalogenid der Formel (I)

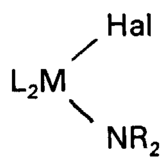

in welcher

L einen Metallocenliganden,
Hal ein Halogen aus der Gruppe F, Cl, Br und J,
M ein Metall aus der Gruppe III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen, darstellen, wobei die Amidogruppe $NR_2$ auch einen Heterocyclus mit bis zu 8 C-Atomen bilden kann, gegebenenfalls unter Einschluß weiterer Heteroatome, sowie einen Cokatalysator.

Es wurde überraschenderweise festgestellt, daß die (Co)-Polymerisationsergebnisse drastisch verbessert werden können, wenn man Metallocenamidhalogenide der Formel I in einem Katalysatorsystem verwendet. Diese zeigen verglichen mit den Metallocendichloriden nach der Aktivierung durch z.B. MAO eine sehr viel höhere Aktivität auch bei geringen MAO-Mengen.

Besonders bevorzugt weisen die im Katalysatorsystem enthaltenen Metallocenamidchloride der Formel I dabei als Metalle Titan, Zirkonium oder Hafnium auf.

Besonders bevorzugte Metallocenamidhalogenide der Formel I weisen als Halogenatom ein Chloratom auf.

Der Rest -$NR_2$ in Formel I bedeutet eine kovalent an das Metallatom gebundene Amido-Gruppierung. Aminverbindungen, die dativ nur über das freie Elektronenpaar an das Metallzentralatom gebunden sind, gelten nicht als Amidogruppierungen im Sinne der vorliegenden Erfindung.

Als Metallocenliganden L können die Metallocenamidchloride alle zu diesem Zweck bekannten oder geeigneten verknüpften oder unverknüpften π-Systeme enthalten. Geeignete Systeme sind dem Fachmann bekannt. Als beispielhaft und auch vorteilhaft können gegebenenfalls substituierte Cyclopentadienyl (Cp)-, Indenyl (Ind)- und Fluorenyl (Flu)-Reste genannt werden. Es können hierbei 2 einzelne, gleiche oder verschiedene Liganden ebenso vorhanden sein wie ein bivalent mit M verknüpfter Ligand, enthaltend zwei π-Systeme, oder ein über einen weiteren Rest mit M verknüpfter Metallocenligand mit einem π-System. $L_2$ bedeutet daher nicht unbedingt, dass 2 separate Liganden vorhanden sein müssen, sondern vielmehr auch die Möglichkeit, dass 2 Vatenzen von M durch einen bivalenten Liganden L besetzt sind. Derartige bivalente Liganden können beispielsweise zwei gleiche oder verschiedene π-Systeme, wie z.B. gegebenenfalls subsitutiertes Cp, Ind oder Flu, enthalten, die miteinander verbrückt sind und jeweils an das Metallatom binden. Es ist aber ebenfalls möglich, dass nur ein π-Ligandensystem vorhanden ist, an welches wiederum Rest R* gebunden ist, der die zweite Bindung an das Metallatom vermittelt. Der Rest R* kann alle Bedeutungen haben, wie sie später für die Metallocenamidhalogenide beschrieben sind. Geeignete Metallocenliganden sind dem Fachmann bekannt und können bspw. aus den Literaturstellen EP 0 495 099 und PCT/WO90/07526 entnommen werden. Besonders bevorzugte Liganden sind beispielsweise die Dimethylsilyl(tetramethylcyclopentadienyl)tert.-butylamido-Gruppierung sowie die Gruppierung $(CH_3)_2Si(Ind)_2$- oder jeweils noch anders am π-Liganden substituierte Gruppierungen.

Es ist vorteilhaft, zusammen mit dem Metallocenamidhalogenid der Formel I im Katalysatorsystem als Cokatalysatoren Aluminiumalkyle oder Borcokatalysatoren einzusetzen, besonders bevorzugt das Methylaluminoxan MAO.

Prinzipiell können die Verbindungen der Formel I auch als Mischungen oder als Mischungen mit anderen Metallocenen, Halbsandwichverbindungen oder klassischen Ziegler-Natta-Katalysatoren im erfindungsgemäßen Katalysatorsystem vorhanden sein. Als Cokatalysator ist desweiteren jede Verbindung geeignet, die das Metallocenamidhalogenid der Formel I in ein Kation überführen und dieses stabilisieren kann.

Die beschriebenen Katalysatorsysteme zeichnen sich durch eine außerordentlich hohe Aktivität aus und es wird eine deutliche geringere Cokatalysatormenge benötigt, insbesondere bei der Verwendung von MAO, bezogen auf bisher bekannte Katalysatoren und Katalysatorsysteme, insbesondere die Metallocendichloride oder -diamide.

Die in diesen Katalysatorsystemen enthaltenen Metallocene sind Metallocenamidhalogenide der Formel I

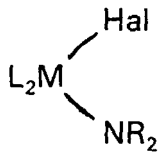

in welcher

L einen Metallocenliganden,
Hal ein Halogen aus der Gruppe F, Cl, Br und J,
M ein Metall aus der Gruppe III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen, darstellen, wobei die Amidogruppe $NR_2$ auch einen Heterocyclus mit bis zu 8 C-Atomen bilden kann, gegebenenfalls unter Einschluß weiterer Heteroatome.

Die Gruppe $-NR_2$ bedeutet eine kovalent an das Metallatom gebundene Amido-Gruppierung. Aminverbindungen, die dativ nur über das freie Elektronenpaar an das Metallzentralatom gebunden sind, gelten nicht als Amidogruppierungen im Sinne der vorliegenden Erfindung.

Die Metallocenamidhalogenide sind besonders vorteilhaft als Komponenten in Katalysatorsystemen einsetzbar. Hierbei können beide Substituenten L am Metall auch gemeinsam einen bivalenten verbrückten Liganden darstellen.

Ein derartiger bivalenter verbrückter Ligand kann beispielsweise über zwei π-Ligandensysteme an das Metall gebunden sein, also z.B. zwei Cyclopentadienyl- oder Indenyl-Einheiten, gegebenenfalls in substituierter Form, enthalten, die miteinander verbunden sind und jeweils an das Metallatom koordiniert sind. Eine andere Möglichkeit ist, daß nur ein π-Ligandensystem vorhanden ist, an welches wiederum ein Rest R* gebunden ist, der die zweite Bindung an das Metallatom vermittelt. Der Rest R* kann dabei eine beliebige Verbrückung zum Metall sein, wobei es wiederum im Rahmen der Erfindung bevorzugt ist, daß R* eine Kohlenwasserstoffkette mit bis zu 5, vorzugsweise bis zu 3 Atomen in der Kette ist, die gegebenenfalls noch zusätzlich substituiert sein kann und gegebenenfalls Heteroatome enthalten kann.

Besonders bevorzugt wird der Rest R* über eine Amidogruppe an das Metall gebunden. In einer weiteren

besonders bevorzugten Form enthält R* eine Silylgruppe, und insbesondere eine Dimethylsilylgruppe.

Für die Metallocenamidhalogenide und die Metallocenliganden L gilt prinzipiell genauso wie für das diese Verbindungen enthaltende Katalysatorsystem, daß hier alle bereits bekannten oder später als geeignet aufgefundenen Metallocenliganden einsetzbar sind. Es ist allerdings besonders günstig, wenn beide Metallocenliganden in Form eines verbrückten bivalenten Liganden vorliegen. Auch derartige verbrückte Ligandensysteme sind in den oben bereits genannten Literaturstellen beschrieben.

Für den Fall, daß zwei unverbrückte $\pi$-Systeme am Metallatom gebunden sind, ist es bevorzugt, daß diese Liganden unsymmetrisch substituiert sind mit Alkyl- oder gegebenenfalls Alkyl-substituierten Arylgruppen. Besonders bevorzugt ist hierbei substituiertes Cp, besonders bevorzugt n-Butyl-Cp oder in 1,2- oder 1,3-Stellung mit Butyl- und Methyl-substituiertes Cp. Indenylreste sind bevorzugt mit einem aromatischen Rest substituiert, der gegebenenfalls selbst wiederum ein oder mehrere Alkylgruppen tragen kann.

Es ist weiter bevorzugt, daß das Metallocenamidhalogenid als Metall Titan, Zirkonium oder Hafnium enthält. Das bevorzugte Halogen ist im Rahmen der vorliegenden Erfindung Chlor, obwohl auch die Brom-Verbindungen gut geeignet sind.

Die Metallocenamidhalogenide der Formel I können z.B. durch Umsetzung der Dihalogenide mit einem Moläquivalent Alkaliamid (z.B. Lithiumamid) synthetisiert werden:

$$L_2MHal_2 + M'NR_2 \rightarrow L_2MHal(NR_2) + M'Hal$$

(A) (I)

Dieser Schritt ist mit guten Ausbeuten durchführbar, bedarf aber als Startverbindungen der Metallocendihalogenide, die ihrerseits oft nur in Ausbeuten von 15 bis 20 % zugänglich sind.

$$2\ LM' + MHal_4 \rightarrow L_2MHal_2 + 2\ M'Hal$$

Neben diesen geringen Ausbeuten weist die Herstellung der Metallocendihalogenide noch einige andere unangenehme Verfahrensschritte und Nachteile auf: So muss die Reaktion oft bei sehr tiefer Temperatur durchgeführt werden, was im technischen Maßstab nachteilig ist. Ein weiteres Problem ist die Reinigung, denn im letzten Syntheseschritt entsteht neben dem Produkt auch die Hauptabfallmenge (M'Hal). Somit kann erst nach der Extraktion des Produktes aus dem Abfall die eigentliche Reinigung, d.h. die Trennung von rac- und meso-Form, erfolgen.

Nach dem Stand der Technik kann man die Dichlorverbindung A auch aus der Diaminoverbindung B darstellen, z.B. durch Umsetzen von B mit Halogensilan:

$$L_2M(NR_2)_2 + 2\ ClSiMe_3 \rightarrow L_2MCl_2 + 2\ Me_3SiNR_2$$

(B) (A)

Nachteilig hierbei allerdings ist, daß B, soweit es nicht besser aus A hergestellt wird, tatsächlich nur im Fall sterisch wenig belasteter Liganden L aus diesen und einem homoleptischen Übergangsmetall-amid unter Abspaltung von Amin hergestellt werden kann (Jordan, US-PS 5,597,935)

$$2\ LH + M(NR_2)_4 \xrightarrow{\Delta T} L_2M(NR_2)_2 + 2\ HNR_2 \qquad (B)$$

Die Aufgabe der vorliegenden Erfindung bestand daher darin, einen leicht und erfolgreich durchführbaren Weg zu u.a. den Metallocenamidhalogeniden der Formel I bereitzustellen.

Gelöst wird diese Aufgabe erfindungsgemäß durch ein Verfahren zur Herstellung von Verbindungen der allgemeinen Formel (II)

$$L_xMHal_y(NR_2)_{z-y} \qquad (II)$$

in welcher

L einen Metallocenliganden,
Hal ein Halogenatom aus der Gruppe F, Cl, Br und J,
M ein Metall aus einer der Gruppen III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen darstellen, wobei die Gruppe $NR_2$ einen Heterocyclus mit bis zu 8 C-Atomen, gegebenenfalls unter Einschluß weiterer Heteroatome, darstellen kann, und für x = 1 gilt, daß y 1, 2 oder 3 und z 3 ist, und für x = 2 gilt, daß y 1 oder 2 und z 2 ist,

durch Umsetzung eines Metallocenliganden LH mit einer Verbindung der Formel (III)

$$Hal_wM(NR_2)_{4-w} \qquad (III)$$

bei der M und R die oben aufgeführten Bedeutungen haben und w eine ganze Zahl von 1 bis 3 darstellt.

Überraschenderweise wurde nämlich im Rahmen dervorliegenden Erfindung festgestellt, daß gemischte (heteroleptische) Metallamidhalogenide (III) sich mit Liganden LH direkt zu gemischten Metallocenamidhalogeniden der Formel I oder auch zu Metallocendihalogeniden A umsetzen lassen. Erstaunlicherweise kommt es dabei nicht durch das freigesetzte Amin zu einem Halogen-Amidaustausch am Metallocen-Zentrum.

L, M und Hal haben auch im erfindungsgemäßen Verfahren die bereits oben für die Verbindungen der Formel I angegebenen Bedeutungen.

Je nach Zusammensetzung der Übergangsmetallstartverbindung der Formel III können erfindungsgemäß bereits am Anfang der Synthese die Endprodukte festgelegt werden. So kann gemäß einer Ausführungsform der Erfindung folgende Reaktion stattfinden:

$$2\,LH + Hal_wM(NR_2)_{4-w} \rightarrow L_2MHal_y(NR_2)_{2-y} + 2\,HNR_2$$

wobei w gleich y ist und 1 oder 2 bedeutet.
(2 LH können im vorliegenden Fall auch HL-LH bedeuten, und es ergibt sich dann eine Verbindung mit einem divalenten, verbrückten Liganden.)

Man hat die Wahlmöglichkeit, ob man die herkömmlichen Metallocendichloride mit y = 2 oder die neuen erfindungsgemäßen Metallocenamidchloride mit y = 1 herstellt. In jedem Fall gilt, daß im letzten und entscheidenden Verfahrensschritt keine Salzfracht als Nebenprodukt entsteht. Eine aufwendige Produktextraktion entfällt deswegen, und man kann sofort die rac-meso-Trennung durchführen. Zusätzlich wird ein weiterer Nachteil der klassischen Route, nämlich die Tieftemperatur-Reaktionsbedingungen vermieden. Die Synthese wird stattdessen bei erhöhter Temperatur (> 100°C und vorzugsweise ca. 160 - 170°C), welche technisch leichter realisiert werden kann, durchgeführt.

Ein wichtiger Vorteil des erfindungsgemäßen Synthesewegs besteht darin, daß es keine Einschränkungen gibt bezüglich des organischen Restes am Metallocenliganden. Alle bisher bekannten verknüpften $\pi$-Systeme ((ggf. substituiertes) Cp; (ggf. substituierte) Ind- und Flu-Systeme) können mittels dieser Reaktion in den späteren Katalysator eingebaut werden. Vor allem aber gibt es auch keine Probleme mit Substituenten in der 2-Position am Indengerüst.

Gerade diese Substituenten sind aber von besonderer Bedeutung, denn die zugehörigen Katalysatoren gehören zu den bevorzugtesten ihrer Art, denn die damit hergestellten Polymere zeichnen sich durch hohe Molmassen aus.

Die neu gefundene Synthese ist nicht auf zwei unverbrückte oder einen divalenten, verbrückten Liganden beschränkt, sondern kann ganz allgemein zur Einführung von organischen Liganden mit schwach aciden Protonen in Übergangsmetallkomplexe angesehen werden.

Somit eröffnet sich auch die Möglichkeit, Metallkomplexe mit nur einem $\pi$-Liganden herzustellen (z.B. $Cp^*MHal_3$), welche ebenfalls auf dem Gebiet der Polymerisation verwendet werden. Dazu kann eine Startverbindung mit der Zusammensetzung Monoamidohalogenmetall-Substanz mit dem entsprechenden Liganden zur Reaktion gebracht werden.

$$LH + Hal_wM(NR_2)_{4-w} \rightarrow LMHal_y(NR_2)_{3-y} + HNR_2$$

wobei w = y = 1, 2 oder 3 bedeutet.

Die Reaktionsbedingungen und die Vorteile sind die gleichen wie oben bereits für die erfindungsgemäße Verfahrensweise dargelegt.

In bevorzugten Ausführungsformen der Erfindung werden bei dem Verfahren als Metallocenliganden die gegebenenfalls substituierten Cyclopentadienyl-, Indenyl- oder Fluorenyl-Verbindungen eingesetzt. Diese Liganden

können dann, wie oben bereits ausgeführt, als zwei einzelne, gleiche oder verschiedene Liganden ebenso eingesetzt werden wie als verbrückte Liganden oder als ein Ligand, der über einen weiteren Rest R* bzw. ein Heteroatom zwei Valenzen des Metallatoms absättigt. Als Metall wird vorteilhaft Titan, Zirkonium oder Hafnium eingesetzt.

In einer besonders bevorzugten Ausführungsform der Erfindung wird ein neues erfindungsgemäßes Metallocenamidhalogenid und insbesondere ein Metallocenamidchlorid gemäß dem erfindungsgemäßen Verfahren hergestellt.

Die folgenden Beispiele sollen die Erfindung weiter erläutern:

Beispiel 1

Darstellung von Dichloro[dimethylsilyl(tetramethylcyclopentadienyl)tert-butylamido]titan (IV)

Unter Inertgasatmosphäre werden 283 mg (1,368 mmol) Dichloro-bis(dimethylamido)titan (IV) eingewogen und in 15 ml Mesitylen gelöst. Diese Lösung wird bei Raumtemperatur mit 344 mg (1,368 mmol) (Tetramethylcyclopentadienyldimethylsilyl)tert-butylamin versetzt. Die Lösung wird sodann 1 1/4 Stunden unter Rückfluß erhitzt (165°C). Das Lösungsmittel wird unter reduziertem Druck abdestilliert und der Rückstand mit Hexan extrahiert. Durch anschließende Kristallisation kann das Produkt in kristalliner Form isoliert werden.

Charakterisierung:

$^1$H-NMR (400 MHz, $CDCl_3$, 25°C):
δ[ppm] = 0.69 ($(CH_3)_2Si$, 6H), 1.42 (tertbutyl, 9H), 2.12 ($CH_3$, 6H), 2.22 ($CH_3$, 6H).
$^{13}$-NMR (100 MHz, $CDCl_3$, 25°C):
δ[ppm] = 5.5, 13.1, 17.3, 32.6, 62.3, 126.9, 138.1, 140.9.

Beispiel 2

Darstellung von (Chloro)(dimethylamido)[dimethylsilyl(tetramethylcyclopentadienyl)tert-butylamido]titan(IV)

Unter Inertgasatmosphäre werden 190 mg (0,516 mmol) Dichloro[dimethylsilyl(tetramethylcyclopentadienyl)tert- butylamido]titan und 26 mg (0,510 mmol) Lithiumdimethylamid eingewogen und bei Raumtemperatur in 20 ml Hexan gelöst. Der Ansatz wird 30 min bei Raumtemperatur gerührt und 1,5 h unter Rückfluß erhitzt. Nach Filtration der Lösung wird das Lösungsmittel teilweise unter reduziertem Druck abdestilliert und bei -30°C kristallisiert. Das Produkt fällt als rot kristalliner Feststoff an.

Charakterisierung:

$^1$H NMR (400 MHz, $CDCl_3$, 25°C):
δ[ppm] = 0.50 ($(CH_3)_2Si$, 3H), 0.56 ($(CH_3)_2Si$, 3H), 1.39 (tertbutyl, 9H), 1.63 ($CH_3$, 3H), 1.94 ($CH_3$, 3H), 2.12 ($CH_3$, 6H), 2.80 ($N(CH_3)_2$, 6H).

Beispiel 3

Darstellung von Chlorobis(dimethylamido)[dimethylsilyl(tetramethylcyclopentadienyl)tert-butylamin]titan(IV)

Unter Inertgasatmosphäre werden 408 mg (1,893 mmol) Chlorotris(dimethylamido)titan(IV) eingewogen und in 20 ml Mesitylen gelöst. Diese Lösung wird bei Raumtemperatur mit 476 mg (1,893 mmol) (Tetramethylcyclopentadienyldimethylsilyl)tert-butylamin versetzt. Die Lösung wurde sodann 1 1/4 Stunden unter Rückfluß erhitzt (111°C). Die Lösung wird durch Filtration von Feststoffbeimengungen befreit und das Lösungsmittel unter reduziertem Druck abdestilliert. Das Produkt fällt nahezu rein an.

Charakterisierung:

$^{1}$H-NMR (400 MHz, $CDCl_3$, 25°C):
δ[ppm] = 0.09 ($(CH_3)_2$Si, 6H), 1.08 (tertbutyl, 9H), 1.83 ($CH_3$, 6H), 2.00 ($CH_3$, 6H), 3.03 ($N(CH_3)_2$, 12H).

Beispiel 4

Darstellung von Trichloro(pentamethylcyclopentadienyl)titan(IV)

Unter Inertgasatmosphäre werden 210 mg (1,059 mmol) Trichlorodimethylamidotitan(IV) eingewogen und in 15 ml Mesitylen gelöst. Diese Lösung wird auf -5O°C abgekühlt und 145 mg (1,059 mmol) Pentamethylcyclopentadien zugespritzt. Die Lösung wird sodann 1 1/2 Stunden unter Rückfluß erhitzt (165°C). Nach destillativer Entfernung des Lösungsmittels unter reduziertem Druck wird der Rückstand mit Hexan extrahiert. Nach anschließender Entfernung des Lösungsmittels des Extraktes kann das Produkt isoliert werden.

Charakterisierung:

$^{1}$H-NMR (400 MHz, $CDCl_3$, 25°C):
δ[ppm] = 1.89 ($C_5(CH_3)_5$).

$^{13}$C-NMR (100 MHz, $CDCl_3$, 25°C):
δ[ppm] = 14.0 ($C_5(CH_3)_5$), 137.27 ($C_5(CH_3)_5$).

Beispiel 5

Darstellung von rac-Chloro[$\eta^5$:$\eta^5$-bis(1-indenyl)dimethylsilyl](dimethylamido)zirkonium

Unter Inertgasatmosphäre werden $ZrCl[N(CH_3)_2]_3$ (184 mg, 0.711 mmol) und $(CH_3)_2Si(IndH)_2$ (205 mg, 0.711 mmol) in 20 ml Mesitylen bei Raumtemperatur gelöst. Diese Lösung wird im Ölbad bis zum Siedepunkt des Lösungsmittels erwärmt und 2,5 h unter Rückfluß gekocht. Die Heizung des Ölbades wird ausgeschaltet und das Lösungsmittel des Reaktionsansatzes aus dieser heißen Lösung unter reduziertem Druck von $8*10^{-4}$ Pa destillativ entfernt. Die Temperatur des Ölbades erniedrigt sich durch das Entfernen des Lösungsmittels, wobei die Temperatur durch ein Heißwasserbad ebenfalls erhöht werden kann. Der Rückstand wird mit 30 ml Toluol extrahiert und das Extrakt bis zum Trübpunkt bei Raumtemperatur eingeengt. Die Lösung wird nun langsam auf -30°C abgekühlt und $rac(CH_3)_2Si(ind)_2ZrCl[N(CH_3)_2]$ als roter kristalliner Feststoff isoliert.

Charakterisierung:

$^{1}$H-NMR (400 MHz, $C_6D_6$, 25°C):
δ[ppm] = 0.82, 0,94 ($(CH_3)_2$Si, 6H), 2.51 ($N(CH_3)_2$, 6H), 6.04 - 7.68 (12H).

$^{13}$C-NMR (100 MHz, $C_6D_6$, 25°C):
δ[ppm] = - 2.30, - 1.15 ($(CH_3)_2$Si), 48.21 ($N(CH_3)_2$), 111 - 135 (aromat. C)).

Beispiel 6

Darstellung von rac-Chloro[$\eta^5$:$\eta^5$-bis(1-indenyl)dimethylsilyl](dimethylamido)hafnium

Unter Inertgasatmosphäre werden $HfCl[N(CH_3)_2]_3$ (312 mg, 0.901 mmol) und $(CH_3)_2Si(IndH)_2$ (260 mg, 0.901 mmol) in 25 ml Mesitylen bei Raumtemperatur gelöst. Diese Lösung wird im Ölbad bis zum Siedepunkt des Lösungsmittels erwärmt und 2,5 h unter Rückfluß gekocht. Die Heizung des Ölbades wird ausgeschaltet und das Lösungsmittel des Reaktionsansatzes aus dieser heißen Lösung unter reduziertem Druck von $8*10^{-4}$ Pa destillativ ent-

fernt. Die Temperatur des Ölbades erniedrigt sich durch das Entfernen des Lösungsmittels, wobei die Temperatur durch ein Heißwasserbad ebenfalls erhöht werden kann. Der Rückstand wird mit Toluol extrahiert und mehreren Kristallisationen unterzogen, bis das Produkt als roter kristalliner Feststoff isoliert werden kann.

Charakterisierung:

$^1$H-NMR (400 MHz, $C_6D_6$, 25°C):
δ[ppm] = 0.69, 0.73 ($(CH_3)_2Si$, 6H), 2.52 ($N(CH_3)_2$, 6H), 5.89 - 7.54 (12H).

$^{13}$C-NMR (100 MHz, $C_6D_6$, 25°C):
δ[ppm] = - 2.29, - 1.12 ($(CH_3)_2Si$), 47.82 ($N(CH_3)_2$), 110 - 135 (aromat. C)).

Beispiel 7

Darstellung von rac-Chloro[$\eta^5$:$\eta^5$-bis(2-methylinden-1-yl)dimethylsilyl](dimethylamido)zirkonium

Unter Inertgasatmosphäre werden $ZrCl[N(CH_3)_2]_3$ (425 mg, 1.642 mmol) und $(CH_3)_2Si(2\text{-}Me\text{-}IndH)_2$ (520 mg, 1.642 mmol) in 20 ml Mesitylen bei Raumtemperatur gelöst. Diese Lösung wird im Ölbad bis zum Siedepunkt des Lösungsmittels erwärmt und 3 h unter Rückfluß gekocht. Die Heizung des Ölbades wird ausgeschaltet und das Lösungsmittel des Reaktionsansatzes aus dieser heißen Lösung unter reduziertem Druck von $8*10^{-4}$ Pa destillativ entfernt. Die Temperatur des Ölbades erniedrigt sich durch das Entfernen des Lösungsmittels, wobei die Temperatur durch ein Heißwasserbad ebenfalls erhöht werden kann. Der Rückstand wird mit Toluol extrahiert und mehreren Kristallisationen unterzogen, bis das Produkt als roter kristalliner Feststoff isoliert werden kann.

Charakterisierung:

$^1$NMR (400 MHz, $C_6D_6$, 25°C:
δ[ppm] = 0.80, 0.88 ($(CH_3)_2Si$, 6H), 2.25, 2.27 ($(CH_3)$Ind, 6H), 2.60 ($N(CH_3)_2$, 6H), 6.50 - 7.71 (12H).
$^{13}$C-NMR (100 MHz, $C_6D_6$, 25°C):
δ[ppm] = 2.10, 2.44 ($(CH_3)_2Si$), 17.38, 18.16 ($(CH_3)$Ind) 49.40 ($N(CH_3)_2$), 115 - 135 (aromat. C)).

Beispiel 8

Darstellung von rac-Bromo[$\eta^5$:$\eta^5$-bis(1-indenyl)dimethylsilyl](dimethylamido)zirkonium

Unter Inertgas werden 198 mg (0,653 mmol) $ZrBr[NMe_2]_3$ und 188 mg (0,652 mmol) $Me_2Si(IndH)_2$ in 10 ml Toluol gelöst und anschließend das Lösungsmittel wieder abdestilliert. Der zurückbleibende Feststoff wird auf 110°C erhitzt, wobei eine Schmelze entsteht. Nach 30 min wird die Schmelze auf Raumtemperatur abgekühlt. Die rote Substanz wird in 5 ml Toluol aufgenommen und von unlöslichen Feststoffanteilen durch Filtration getrennt. Nach mehrmaligem Kristallisieren bei -30°C aus Toluol und Hexan kann der gewünschte Komplex isoliert werden.

$^1$H-NMR (400 MHz, $C_6D_6$, 25°C):
[ppm]δ = 0,58 (s, 3H, $Si(C\underline{H}_3)_2$), 0,72 (s, 3H, $Si(C\underline{H}_3)_2$, 2,46 (s, 6H, $N(C\underline{H}_3)_2$), 5,91 (d, 1H, $^3J$ (H,H) = 3,08 Hz, 5-Ring), 5,98 (d, 1H, $^3J$(H,H) = 3,28 Hz, 5-Ring), 6,59 (dd, 1H, $^3J$(H,H) = 7,44 Hz, $^3J$(H,H) = 7,69 Hz, 6-Ring), 6,73 (d, 1H, $^3J$(H,H) = 3,24 Hz, 5-Ring), 6,85 ("dd", 1H, $^3J$(H,H) = 7,53 Hz, $^3J$(H,H) = 7,60 Hz, 6-Ring), 6,93 ("dd", 1H, $^3J$(H,H) = 7,53 Hz, 6-Ring), 6,96 ("dd", 1H, $^3J$(H,H) = 8,80 Hz, 6-Ring), 7,04 ("dd", 1H, $^3J$(H,H) = 7,75 Hz, $^3J$(H,H) = 7,90 Hz, 6-Ring), 7,18 ("t", 1H, $^3J$(H,H) = 9,02 Hz, 6-Ring), 7,32 (dd, 1H, $^3J$(H,H) = 9,07 Hz, $^3J$(H,H) = 8,65 Hz, 6-Ring), 7,44 (dd, 1H, $^3J$(H,H) = 7,06 Hz, $^3J$(H,H) = 8,43 Hz, 6-Ring), 7,49 (d, 1H, $^3J$(H,H) = 8,58 Hz, 6-Ring).

Beispiel 9

Darstellung von rac-[$\eta^5$:$\eta^5$-Bis(1-indenyl)-dimethylsilyl](iodo)(dimethylamido)zirkonium

Unter Inertgas werden 347 mg (0,990 mmol) $ZrI[NMe_2]_3$ und 286 mg (0,990 mmol) $Me_2Si(IndH)_2$ in 10 ml

Toluol gelöst und anschließend das Lösungsmittel wieder abdestilliert. Der zurückbleibende Feststoff wird auf 110°C erhitzt, wobei eine Schmelze entsteht, welche 30 min unter vermindertem Druck gehalten wird. Nach 30 min wird die Schmelze auf Raumtemperatur abgekühlt. Die rote Substanz wird in 5 ml Toluol aufgenommen von unlöslichen Feststoffanteilen durch Fittration getrennt. Nach mehrmaligem Kristallisieren bei -30°C aus Toluol und Hexan kann der gewünschte Komplex isoliert werden.

$^1$H-NMR (400 MHz, $C_6D_6$, 25°C):
[ppm]δ = 0,53 (s, 3H, Si(C$\underline{H}_3$)$_2$), 0,70 (s, 3H, Si(C$\underline{H}_3$)$_2$), 2,42 (s, 6H, N(C$\underline{H}_3$)$_2$), 5,83 (d, 1H, $^3$J(H,H) = 3,02 Hz, 5-Ring), 6,00 (d, 1H, $^3$J(H,H) = 3,27 Hz, 5-Ring), 6,57 (dd, 1H, $^3$J(H,H) = 7,34 Hz, $^3$J(H,H) = 7,60 Hz, 6-Ring), 6,65 (d, 1H, $^3$J(H,H) = 3,09 Hz, 5-Ring), 6,86 (m, 2H, 6-Ring) 7,16 (m, 1H, 6-Ring), 7,26 (d, 1H, $^3$J(H,H) = 9,12 Hz, 6 Ring), 7,28 (d, 1H, $^3$J(H,H) = 8,55 Hz, 6-Ring), 7,49 (m, 3H, 6-Ring).

Beispiel 10

Darstellung von rac-Chloro[η$^5$:η$^5$-2,2-bis(1-indenyl)propandiyl](dimethylamido)zirkonium

Unter Schutzgas werden 174 mg (0,672 mmol) ZrCl[N(CH$_3$)$_2$]$_3$ und 183 mg (0,672 mmol) 2,2-Bis(indenyl)propan eingewogen und in 10 ml Mesitylen gelöst. Die Reaktionslösung wird unter Rückfluß 2 h auf 165°C erhitzt, wobei sich die Farbe nach dunkel rot verändert. Das Lösungsmittel wird unter vermindertem Druck abdestilliert und durch Toluol ersetzt. Nach einer Filtration wird das Reaktionsgemisch zur Kristallisation eingeengt und auf -30°C abgekühlt. Das Produkt kann als roter kristalliner Feststoff isoliert werden.

$^1$H-NMR (400 MHz, d$^8$-thf, 25°C):
[ppm]δ = 2,22 (s, 3H, C8C$\underline{H}_3$)$_2$), 2,39 (s, 3H, C(C$\underline{H}_3$)$_2$), 2,44 (s, 6H, N(C$\underline{H}_3$)$_2$), 6,14 (d, 1H, $^3$J(H,H) = 3,51 Hz, 5-Ring), 6,54 (d, 1H, $^3$J(H,H) = 3,51 Hz, 5-Ring), 6,59 ("d", 2H, $^3$J(H,H) = 3,51 Hz, 5-Ring), 6,75 (dd, 1H, $^3$J(H,H) = 6,52 Hz, 6-Ring), 6,87 (m, 1H, 6-Ring), 7,01 (m, 2H, 6-Ring), 7,30 (d, 1H, $^3$J(H,H) = 8,64 Hz, 6-Ring), 7,52 (d, 1H, $^3$J(H,H) = 8,53 Hz, 6-Ring), 8,04 (d, 1H, $^3$J(H, H) = 8,53 Hz, 6-Ring).

Beispiel 11

Darstellung von rac-Chloro[η$^5$:η$^5$-bis(2-methyl-4,5-benzinden-1-yl)dimethylsilyl](diemethylamido)zirkonium

Unter Schutzgas werden 230 mg (0,888 mmol) ZrCl[N(CH$_3$)$_2$]$_3$ und 370 mg (0,888 mmol) Bis(2-methyl-4,5-benzindenyl)dimethylsilan eingewogen und in 10 ml Mesitylen gelöst. Die Reaktionslösung wird unter Rückfluß 2 h auf 165°C erhitzt, wobei sich die Farbe nach dunkel rot verändert. Das Lösungsmittel wird unter vermindertem Druck abdestilliert und durch Toluol ersetzt. Nach einer Filtration wird das Reaktionsgemisch zur Kristallisation eingeengt und auf -30°C abgekühlt. Das Produkt kann als roter kristalliner Feststoff isoliert werden.

$^1$H-NMR (400 MHz, $C_6D_6$, 25°C):
[ppm]δ = 0,86 (s, 3H, Si(C$\underline{H}_3$)$_2$), 0,91 (s, 3H, Si(C$\underline{H}_3$)$_2$), 2,03 (s, 6H, N(C$\underline{H}_3$)$_2$), 2,37 (s, 3H, 2-$\underline{Me}$Ind), 2,39 (s, 3H 2-$\underline{Me}$Ind), 7,00 - 7,88 (m, 14H, Benzindenyl).

Beispiel 12

Darstellung von rac-Dichloro[η$^5$:η$^5$-bis(1-indenyl)dimethylsiyl]zirkonium

Unter Schutzgas werden 220 mg (0,763 mmol) Bis(indenyl)dimethylsilan und 301 mg (0,763 mmol) Di(chloro)bis(dimethylamido)bis(tetrahydrofurano)zirkonium eingewogen und in 20 ml Mesitylen suspendiert. Nach 2 h unter Rückfluß bei 165°C wird die Reaktionslösung auf Raumtemperatur abgekühlt und das Lösungsmittel unter vermindertem Druck abdestilliert. Der Rückstand wird in Toluol aufgenommen und von unlöslichen Bestandteilen durch Filtration befreit. Das Volumen des Lösungsmittels wird verringert und die Lösung bei -30°C kristallisiert.

$^1$H-NMR (400 MHz, $CDCl_3$, 25°C):
[ppm]δ = 1,12 (s, 6H, Si(C$\underline{H}_3$)$_2$), 6,08 (d, 2H, 5-Ring), 6,90 (d, 2H, 5-Ring), 7,04 - 7,60 (m, 8H, aromat.)

Beispiel 13

Darstellung von rac-Dichloro[$\eta^5$:$\eta^5$-bis(2-methyl-4,5-benzinden-1-yl)dimethylsilyl]zirkonium

Unter Schutzgas werden 322 mg (0,773 mmol) Bis(2-methyl-4,5-benzindenyl)dimethylsilan und 305 mg (0,773 mmol) Di(chloro)bis(dimethylamido)bis(tetrahydrofurano)zirkonium eingewogen und in 20 ml Mesitylen und 5 ml THF gelöst. Die Reaktionslösung wird 2 h bei 165°C unter Rückfluß erhitzt und anschließend auf Raumtemperatur langsam abgekühlt. Das Lösungsmittel wird entfernt und der Rückstand in Toluol aufgenommen. Nach Filtration wird das Lösungsmittel eingeengt und das Produkt bei -30°C kristallisiert.

$^1$H-NMR (400 MHz, $CDCl_3$, 25°C):
[ppm]δ = 1,37 (s, 6H, Si(C<u>H</u>$_3$)$_2$), 2,38 (s, 6H, 2-<u>Me</u>Ind), 7,20 - 7,98 (m, 14H, aromat.

Beispiel 14

rac-Chloro[$\eta^5$:$\eta^5$-bis-1,2-(1-indenyl)ethandiyl](dimethylamido)zirkonium

Unter Inertgas werden 1,214 g (2,9 mmol) rac($CH_2$Ind)$_2$Zr$Cl_2$ und 0,170 g (3,3 mmol) $LiNMe_2$ in 30 ml Toluol gelöst bzw. suspendiert. Anschließend refluxiert man für 3 h. Nach dem Abkühlen wird der Ansatz filtriert, vom Filtrat destilliert man das Lösungsmittel ab. Nach dem Trocknen kann man den Komplex als rates Pulver isolieren.

$^1$H-NMR (200 MHz, $C_6D_6$, 25°C)
[ppm]δ = 2,52 (s, 6H, N(C<u>H</u>$_3$)$_2$), 2,83-3,45 (m, 4H, (C<u>H</u>$_2$)$_2$), 5,59 (d, 1H, 5-Ring), 5,97 (d, 1H, 5-Ring), 6,31 (dd, 1H, 5-Ring), 6,44 (dd, 1H, 5-Ring), 6,58-7,49 (m, 8H, 6-Ring).

Beispiel 15

Chloro[$\eta^5$:$\eta^5$-bis(n-Butylcyclopentadienyl)](dimethylamido)hafnium

Unter Inertgas werden 10 g (20,33 mmol) (nBuCp)$_2$Hf$Cl_2$ und 1,04 g (20,33 mmol) $LiNMe_2$ in 100 ml Toluol gelöst bzw. suspendiert. Man refluxiert 3 h, anschließend filtriert man den Ansatz bei Raumtemperatur. Nach dem Abdestillieren des Lösungsmittels und Trocknen im Hochvakuum kann der Komplex als braunes Öl isoliert werden.

$^1$H-NMR (200 MHz, $C_6D_6$, 25°C)
[ppm]δ = 0,86 (t, 6H, $CH_2$-C<u>H</u>$_3$), 1,17-1,53 (m, 8H, C<u>H</u>$_2$), 2,36-2,71 (m, 4H, C<u>H</u>$_2$), 2,92 (s, 6H, N(C<u>H</u>$_3$)$_2$), 5,46-5,50 (m, 2H, 5-Ring), 5,53-5,57 (m, 2H, 5-Ring), 5,83-5,88 (m, 2H, 5-Ring), 5,91-5,94 (m, 2H, 5-Ring)

Beispiel 16

Chloro[$\eta^5$:$\eta^5$-bis(n-butylcyclopentadienyl)](dimethylamido)zirkonium

Unter Inertgas werden 14,834 g (36,67 mmol) (nBuCp)$_2$Zr$Cl_2$ und 1,871 g (36,67 mmol) $LiNMe_2$ in 100 ml Toluol gelöst bzw. suspendiert. Man refluxiert 3 h, anschließend filtriert man den Ansatz bei Raumtemperatur. Nach dem Abdestillieren des Lösungsmittels und Trocknen im Hochvakuum kann der Komplex als braunes Öl isoliert werden.

$^1$H-NMR (200 MHz, $C_6D_6$, 25°C)
[ppm]δ = 0,86 (t, 6H, $CH_2$-C<u>H</u>$_3$), 1,18 - 1,55 (m, 8H, C<u>H</u>$_2$), 2,39-2,69 (m, 4H, C<u>H</u>$_2$), 2,86 (s, 6H, N(C<u>H</u>$_3$)$_2$), 5,49-5,52 (m, 2H, 5-Ring), 5,57-5,62 (m, 2H, 5-Ring), 5,85-5,90 (m, 2H, 5-Ring), 5,99-6,02 (m, 2H, 5-Ring)

$^{13}$C-NMR (50 MHz, $C_6D_6$, 25°C)
[ppm]δ = 14,12 ($CH_2$-<u>C</u>H$_3$), 22,80/30,12/33,53 (-<u>C</u>H$_2$-), 50,45 (N(<u>C</u>H$_3$)$_2$), 107,66/110,04/111,74/114,54/131,79 (5-Ring)

Beispiel 17

Ein 0,5 l Rührreaktor wird nach dem Inertisieren bei Raumtemperatur mit 0,24 l Toluol und 5 ml 10 %igem MAO gefüllt und die Mischung auf die Polymerisationstemperatur von 40°C aufgeheizt. Die Lösung wird anschliessend mit gasförmigem Propengas mit 2 bar gesättigt.

5 mg Bis(indenyl)dimethylsilylenzirkonium(dimethyl)amidchlorid werden in 50 ml Toluol gelöst und mit 3,1 ml 10 %igem MAO versetzt. 6 ml dieser Stammlösung werden zum Start der Polymerisation in den Rührreaktor überführt. Nach einer Stunde wird die Reaktionsmischung mit salzsaurem Ethanol gequencht.
Man erhält 19,8 g isotaktisches Polypropylen mit einem Schmelzpunkt von 144°C und einer Isotaktizität von 94 %.

Beispiel 18

Ein 0,5 l Rührreaktor wird nach dem Inertisieren bei Raumtemperatur mit 0,24 l Toluol und 3 ml 25 Gew.-%igem Triisobutylaluminium gefüllt und die Mischung auf die Polymerisationstemperatur von 40°C aufgeheizt. Die Lösung wird anschließend mit gasförmigem Propengas mit 2 bar gesättigt. 5 mg Bis(indenyl)dimethylsilylenzirkonium(dimethyl)amidchlorid werden in 50 ml Toluol gelöst und mit 3,1 ml 10 %igem MAO versetzt. 4 ml dieser Stammlösung werden zum Start der Polymerisation in den Rührreaktor überführt. Nach einer Stunde wird die Reaktionsmischung mit salzsaurem Ethanol gequencht.
Man erhält 22,3 g isotaktisches Polypropylen mit einem Schmelzpunkt von 144,7°C und einer Isotaktizität von 93,5 %.

Beispiel 19

Ein 0,5 l Rührreaktor wird nach dem Inertisieren bei Raumtemperatur mit 0,24 l Toluol und 3 ml 25 Gew.-%igem Triisobutylaluminium gefüllt und die Mischung auf die Polymerisationstemperatur von 60°C aufgeheizt. Die Lösung wird anschließend mit gasförmigem Propengas mit 2 bar gesättigt. 5 mg Bis(indenyl)dimethylsilylenzirkonium(dimethyl)amidchlorid werden in 50 ml Toluol gelöst und mit 3,1 ml 10 %igem MAO versetzt. 2,5 ml dieser Stammlösung werden zum Start der Polymerisation in den Rührreaktor überführt. Nach einer Stunde wird die Reaktionsmischung mit salzsaurem Ethanol gequencht.
Man erhält 9,3 g isotaktisches Polypropylen mit einem Schmelzpunkt von 133°C und einer Isotaktizität von 90,5 %.

**Patentansprüche**

1. Verfahren zur Herstellung von Verbindungen der allgemeinen Formel (II)

$$L_xMHal_y(NR_2)_{z-y} \qquad (II)$$

in welcher

L einen Metallocenliganden,
Hal ein Halogen aus der Gruppe F, Cl, Br und J,
M ein Metall aus den Gruppen III, IV oder V des Periodensysteme und
R gleiche oder unterschiedliche geradkettige oder verzweigte, gesättigte oder ungesättigte Kohlenwasserstoffreste mit bis zu 8 C-Atomen darstellen, wobei die Gruppe $NR_2$ einen Heterocyclus darstellen kann mit bis zu 8 C-Atomen, gegebenenfalls unter Einschluß weiterer Heteroatome, und
x 1 oder 2 bedeutet, wobei
für x = 1 gilt y = 1, 2 oder 3 und z = 3, und
für x = 2 gilt y = 1 oder 2 und z = 2,

durch Umsetzung eines Metallocenliganden LH mit einer Verbindung der Formel III

$$Hal_wM(NR_2)_{4-w} \qquad (III)$$

bei der M und R die oben definierten Bedeutungen haben und w eine ganze Zahl von 1 bis 3 darstellt.

2. Verfahren nach Anspruch 1,
**dadurch gekennzeichnet,**
daß man Metallocenliganden verwendet, die ausgewählt sind aus der Gruppe der gegebenenfalls substituierten Cyclopentadienyl-, Indenyl- oder Fluorenyl-Verbindungen.

3. Verfahren nach Anspruch 1,
**dadurch gekennzeichnet,**
daß man Verbindungen der Formel II darstellt, bei denen x = 2 ist.

**4.** Verfahren nach Anspruch 3,
**dadurch gekennzeichnet,**
daß man als Liganden LH einen divalenten verbrückten Liganden verwendet.

**5.** Verfahren nach Anspruch 4,
**dadurch gekennzeichnet,**
daß der divalente verbrückte Ligand über zwei π-Liganden an das Metall gebunden wird.

**6.** Verfahren nach Anspruch 5,
**dadurch gekennzeichnet,**
daß der divalente verbrückte Ligand über einen π-Liganden und einen daran gebundenen Rest R* an das Metall gebunden ist, wobei der Rest R* eine gegebenenfalls Heteroatome enthaltende und gegebenenfalls substituierte Kohlenwasserstoffkette mit bis zu 5 Atomen wird.

**7.** Verfahren nach Anspruch 6,
**dadurch gekennzeichnet,**
daß der Rest R* eine Amidogruppe enthält, über welche er an das Metall gebunden wird.

**8.** Verfahren nach Anspruch 6 oder 7,
**dadurch gekennzeichnet,**
daß R* eine Silylgruppe und insbesondere eine Dimethylsilylgruppe enthält.

**9.** Verfahren nach einem der Ansprüche 1 bis 8,
**dadurch gekennzeichnet,**
daß man als Metall M Titan, Zirkonium oder Hafnium verwendet.

**10.** Verfahren nach einem der Ansprüche 1 bis 9,
**dadurch gekennzeichnet,**
dass in den Formeln II oder/und III Hal Chlor bedeutet.

**11.** Verfahren nach einem der Ansprüche 1 bis 10,
**dadurch gekennzeichnet,**
daß man ein Metallocenamidchlorid herstellt.